# EUROPEAN PATENT APPLICATION

(11) **EP 1 127 743 A2**
(43) Date of publication of application: **29.08.2001**
(21) Application number: 01500049.0
(22) Date of filing: 26.02.2001
(51) Int. Cl.: B60Q 1/50, B60Q 1/52

(54) **Luminous indicator device for vehicles**

(30) Priority: 28.02.2000 ES 200000503 U
(71) Applicant: Federal Signal Vama, S.A., 08339 Vilassar de Dalt (ES)
(72) Inventor: Bastus Torrens, José, 08339 Vilassar de Dalt, Barcelona (ES)
(74) Representative: Ungria Lopez, Javier

(57) **Abstract**

The luminous indicator device comprises a base 1 which is fastened, for example, on the outside of the roof of a vehicle, said base 1 comprising a support for a flat body 2 which can tilt with respect to it in order to adopt a folded position on the base 1, or an approximately perpendicular unfolded position with respect to it. The flat body 2 comprises a screen 5 on one of its larger surfaces, on which a luminous indication can be shown, and on which lateral sector forming an integral part thereof, a flashing indication can be shown, as a continuation of the screen 5. Both indications are achieved by means of activation of both groups of LEDS 6 and 7. The flat body 2 forms one single unit which comprises in its inside the corresponding electric and/or electronic means for the operation of the LEDs.

## Description

### OBJECT OF THE INVENTION

The present invention, according to what is expressed in the title of this description, refers to a luminous indicator device for vehicles, conceived to be applied to that kind of vehicles which have the need of displaying a sign corresponding to a certain indication on a screen by means of LEDs (light-emitting diodes) or similar luminous components.

Specifically, the device is conceived for being applied on the inside, preferably on the outside tray, or on the outside of the roof of a police vehicle or similar, for indicating that it is precisely a vehicle of security officers or belonging to a certain body, such that that indication is established by means of activation of a series of LEDs situated on an indicator screen which will form the corresponding indicating sign, the screen being complemented by a lateral sector forming an integral part thereof, that is to say, as a continuation of the screen, in whose complementary sector there is provided another series of LEDs (light-emitting diodes) the activation of which produces flashes of a colour differing from that of the indicator, all this forming a single body as sole unit of the assembly. The device may without doubt be extended to other vehicles of different a sector that, due to their use or functions, require incorporation of a similar kind of indicator.

### BACKGROUND OF THE INVENTION

There are certain vehicles which due to their field of use, incorporate inside or outside luminous indicators showing the sign of a message, of one activity or others, whereby the sign may even vary and therefore the indication by switching-on some lamps and switching-off others.

In such sense, an indicator device for police vehicles as generally arranged on the outside of the roof of the vehicle may be cited, the device being formed of a base through which its fastening is effected, on whose base there is mounted, in turn, a tilting flat body on which a screen is established and behind a plate having a plurality of LEDs (light-emitting diodes) at its front side, and at its backside a printed circuit with the corresponding electric and electronic components for operating the device; furthermore with the particularity that the tilting of that flat screen body, from a folded position or superposition over the base up to a perpendicular unfolded position, showing the screen frontally, and viceversa, is carried out by means of a motor having suitable transmission means for making that tilting.

The referred indicator assembly as currently known, has two problems or inconveniences, consisting one of them in its considerable volume in terms of thickness, whilst the other problem or inconvenience being considered as being important is that the indicator device is usually complemented with a luminous and flashing independent signalling device destined to emit an alert light and/or signal of a different colour, such that this luminous or flashing element forms a body being independent from the device that is attached to the indicator, with the inconveniences that it brings about when two units of different technologies have to be manufactured. The flashing elements normally require an independent power supply which makes difficult the installation of the indicator assembly difficult.

### DESCRIPTION OF THE INVENTION

Based on the structure referred to above, the device of the invention has as one of its most notable characteristics, that it incorporates the indicator and the alert device in one single unit or body, whereby manufacture as well as the remaining operations and/or manipulations which need to be carried out from its manufacture up to its final assembly on the vehicle, will be simplified.

As another novelty characteristic of the device, the fact that both functions (that of the indication or message and that of flashing or alert signalling) are provided on the same screen and on the base of LEDs in both cases may be emphasised, said LEDs of the alert signalling device being grouped at an end area, occupying preferably a sector of one or both sides of the screen, whilst the rest thereof will be occupied by LEDs that form the pertinent indicator sign, whereby in one case or the other, it may incorporate a larger number of LEDs in an appropriate arrangement, allowing to vary the sign and thus the indication or message and equally allowing to vary the kind of alert signalling.

The whole device has as well been designed in such a manner that its volume is notably reduced with respect to the known ones, and this as a consequence of using LEDs for both indicating and signalling.

The device will include the electronic and/or electric components being necessary for enabling to carry out the referred functions, as well as for programming the moment of activation of one function or other, and for enabling to determine the simultaneous activation of them or otherwise a sequential activation, etc. It will also include a power supply or supplies and complementary means for the corresponding power input or electric supply to be carried out from the battery of the vehicle itself.

It is evident that the device of the invention involves a solution to the problems and inconveniences referred to above, due to that not only the volume or thickness of the body constituting the device is reduced, but also the two units with different functions and which until now were two independent units, are integrated in one single unit or body.

### BRIEF DESCRIPTION OF THE DRAWINGS

To complement the description which will be made hereinafter and with the object to help to a better understanding of the characteristics of the invention, a set of drawings is attached to the present description, based on which the innovations and advantages of the luminous indicator device for vehicles according to the invention, will be more easily understood. These drawings have been included with an illustrative and non-limiting character.

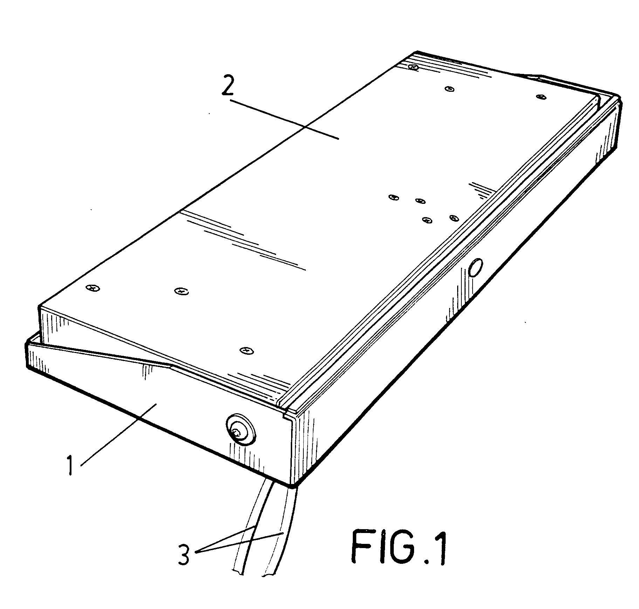

**Figure 1.-** It shows a view according to a general perspective of the device in a folded state, wherein the flat body supporting the screen and the electric and electronic components is superposed over the base and partially wrapped by it.

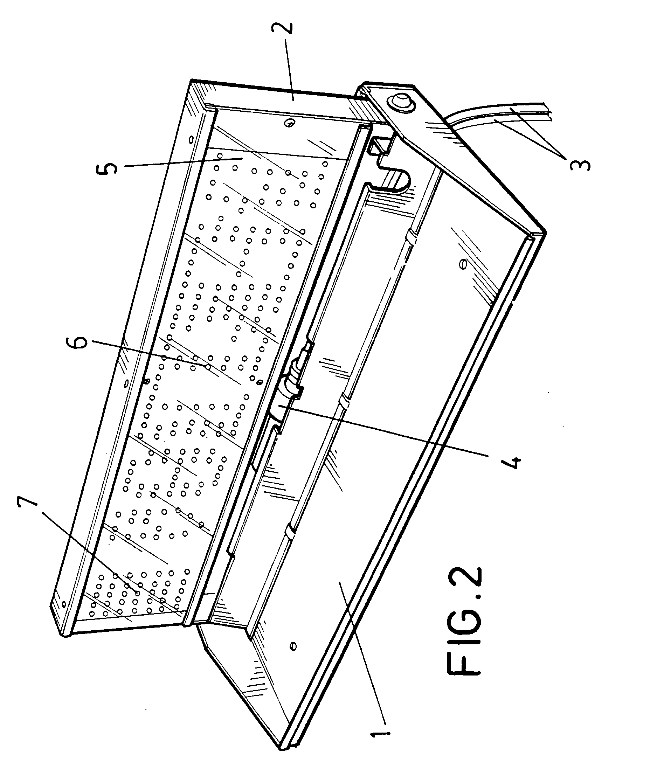

**Figure 2.-** It shows a perspective view of the same device represented in the previous figure in an unfolded state, whereby it can be seen how the flat body of the screen stays in a practically vertical plane with respect to the base, and wherein on the front portion of the screen two groups of small circles correspond to the zone of LEDs which will form the indicator sign and the alert signalling device, respectively, may be appreciated.

### DESCRIPTION OF AN EMBODIMENT OF THE INVENTION

As it may be seen in the figures, the device of the invention comprises a base 1 and a flat body 2 linked with each other in such a manner that the body 2 may tilt from a folded position, as represented in figure 1, and which corresponds to that of superposition over the base 1, up to a position where it is situated practically in a vertical plane as represented in figure 2.

The base 1 is intended to be fitted, preferably, in the inside (on the rear-end tray) or at the outside of a vehicle, emerging from it a connection terminal 3 for supplying the electric and electronic components allowing the operation of the device as will be described bellow.

In this base 1 with side and rear wings and a front wing of less extension, the flat body is perfectly housed when in the folded position thereof.

The contour of the device is rectangular and in correspondence with the edge being considered as rear and internally, the base comprises a channel in which there is housed a motor 4 which actuates transmission means for carrying out the tilting for folding and unfolding the body 2, this latter presenting frontally a screen 5 on which there are established two zones, a main one occupying practically the whole of the extension, and another occupying an end zone of such a screen 5. In these zones, there are provided, respectively, a plurality of LEDs 6, the activation of which will form a sign corresponding to an indication, message or any other theme, as well as another series of LEDs 7 occupying the second zone, more condensedly grouped such that switching-on thereof will be flashing, thereby producing an alert signalling.

That is to say, on a single body and a single screen there are included two sets of LEDs 6 and 7, occupying the same number of zones, the activation of which will give rise to two different themes, one of indication or message as may be the word "police", "traffic", etc., in the case of security forces, and in the other case; a sequential and flashing switching-on of the LEDs 7 which produces an alert signalling in a different colour, preferably blue, and the switching-on of the LEDs 6 of indication in a colour as, for example, orange.

The assembly or device constituted by the base 1 and the body 2, is such that the thickness of the assembly is minimal, thus occupying a small volume although incorporating all necessary means for the operation thereof, such as the already commented motor 4 and appropriate transmission means for tilting the screen body 2, and not only the LEDs 6 and 7, but also the corresponding printed circuit, the electric and electronic components, etc. which remain situated behind the plate supporting the LEDs 6 and 7 on the flat body itself 2.

## Claims

1. **LUMINOUS INDICATOR DEVICE FOR VEHICLES** which, being intended to be applied preferably in the inside of a vehicle on its rear-end tray or at the outside part of the vehicle itself, and comprising a base body (1) on which there is mounted a tilting flat body (2) at which is established a screen (5) by means of which a determinant sign of the corresponding indication or message can be shown, the sign being formed by means of the activation of a series of LEDs (6) provided behind said screen, with the particularity that the flat body (2) on which said screen is established may occupy upon tilting, a folded position of superposition over the base (1) and an unfolded vertical position for allowing the visualisation of the indication being concerned with, **characterised in that** both the base body (1) and the flat body (2) of the screen (5), are oversized in length, the screen incorporating a second group of LEDs (7) being different from the LEDs (6) which determine the indication, the former being positioned within an end sector or zone of the screen itself, all this in such a manner that the activation of said second group of LEDs (7) forms a luminous flashing alert-signalling device being complementary to the indicator sign formed by the LEDs (6), said two elements, the indicator and the alert-signalling device, being integrated in a single unit or body (2) of little thickness.
